(19) Europäisches Patentamt
European Patent Office
Office européen des brevets

(11) EP 3 779 403 B1

(12) EUROPEAN PATENT SPECIFICATION

(45) Date of publication and mention
of the grant of the patent:
03.07.2024 Bulletin 2024/27

(51) International Patent Classification (IPC):
G01N 15/06 (2024.01)    G01N 23/2251 (2018.01)
G01N 23/04 (2018.01)    G01N 15/14 (2024.01)
G01N 23/20091 (2018.01)    G01N 15/0205 (2024.01)
G01N 15/1433 (2024.01)    G01N 15/00 (2024.01)
G01N 15/02 (2024.01)

(21) Application number: 18912356.5

(22) Date of filing: 29.03.2018

(52) Cooperative Patent Classification (CPC):
G01N 15/1433; G01N 15/0205; G01N 15/06;
G01N 23/04; G01N 23/2251; G01N 15/075;
G01N 2015/0046; G01N 2015/0294;
G01N 2015/1493; G01N 2015/1497;
G01N 2223/641

(86) International application number:
PCT/JP2018/013478

(87) International publication number:
WO 2019/186976 (03.10.2019 Gazette 2019/40)

(54) **CHARGED PARTICLE BEAM DEVICE**

LADUNGSTEILCHENSTRAHLVORRICHTUNG

DISPOSITIF À FAISCEAU DE PARTICULES CHARGÉES

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(43) Date of publication of application:
17.02.2021 Bulletin 2021/07

(73) Proprietor: Hitachi High-Tech Corporation
Minato-ku
Tokyo 105-6409 (JP)

(72) Inventors:
• MISE, Hiromi
Tokyo 105-6409 (JP)
• YAGUCHI, Toshie
Tokyo 105-6409 (JP)

(74) Representative: MERH-IP Matias Erny Reichl
Hoffmann
Patentanwälte PartG mbB
Paul-Heyse-Strasse 29
80336 München (DE)

(56) References cited:
EP-A1- 3 091 505    JP-A- 2004 253 261
JP-A- 2005 233 658    JP-A- 2006 228 748
JP-A- 2007 188 721    JP-A- 2010 117 175
JP-A- 2011 040 073    KR-A- 20100 041 120
US-A1- 2018 017 510    US-A1- 2018 076 004

• CHALFOUN JOE ET AL: "MIST: Accurate and
Scalable Microscopy Image Stitching Tool with
Stage Modeling and Error Minimization",
SCIENTIFIC REPORTS, [Online] vol. 7, no. 1, 10
July 2017 (2017-07-10), XP055849263, DOI:
10.1038/s41598-017-04567-y Retrieved from the
Internet:
URL:https://www.nature.com/articles/s41598
-017-04567-y.pdf> [retrieved on 2021-10-08]
• STOTT, W.R. et al.: "Sem-Based Automated Fiber
Counting", Proceedings of the ... annual
conference of the Microbeam Analysis Society,
vol. 16, 13 July 1981 (1981-07-13), pages 53-56,
XP009522686,

- **KOHYAMA, NORIHIKO: "Asbestos Measurements: the current state and problems to be solved", Journal of Environmental Conservation Engineering, vol. 35, no. 5, October 2006 (2006-10), pages 330-337, XP055727161,**

**Description**

Technical Field

The present invention relates to a charged particle beam device, and more particularly to a technique effective for calculating an asbestos concentration.

Background Art

When dismantling a building or the like, a use state of asbestos is examined by visual observation, a design book, or the like, and when the use of the asbestos becomes clear, an analysis work of asbestos is obligated.

In the analysis of asbestos, for example, a certain amount of air is collected from a dismantling site or the like, and the number of the asbestos contained in the collected air is measured. Then, a concentration of the asbestos is detected using a calculation formula based on the measured number of asbestos and the like. Evaluation and examination of the dismantling site are performed based on the detection result and the like.

In this type of analysis device, when analyzing an element of a sample according to an electron beam diffraction phenomenon, a transmission electron microscope for finding an observation region of the electron beam diffraction phenomenon without duplicating and missing is known (for example, see PTL 1). PTL 2, which discloses the preamble of claim 1, describes a classifying method of asbestos and non-asbestos using SEM/EDX and an expert system comprises the following steps: collecting samples and processing the samples; classifying physical and chemical properties on a pollution source classification table after analyzing the collected samples; and producing the concentration of the pollution source after classifying the samples into asbestos and non-asbestos through an expert system using the pollution source classification table.

Citation List

Patent Literature

PTL 1: JP-A-2006-127805
PTL 2: KR 2010 0041120 A

Summary of Invention

Technical Problem

As described above, in the analysis of asbestos, the number of the asbestos contained in a certain amount of collected air is measured. The number of the asbestos is observed using, for example, a fluorescence microscope or a phase difference microscope.

However, counting the number of the asbestos is visually observed by an operator or the like, and the number of counts may be different depending on a skill level of the operator or the like. Accordingly, it may be difficult to calculate a stable asbestos concentration.

An object of the invention is to provide a technique capable of calculating a particle concentration, particularly an asbestos concentration, with high accuracy.

The above and other objects and novel features of the invention will become apparent from the description of the present specification and the accompanying drawings.

Solution to Problem

The aforementioned object is solved by the invention according to the independent claim 1. Further preferred developments are described by the dependent claims.

Advantageous Effect

Effects obtained by typical ones of the invention disclosed in the present application will be briefly described as follows.

The particle concentration of the particle can be calculated with high accuracy.

Brief Description of Drawings

[FIG. 1] FIG. 1 is an explanatory diagram showing an example of a configuration of a charged particle beam device according to an embodiment.

[FIG. 2] FIG. 2 is an explanatory diagram showing an example of an electron beam diffraction image mode of an electron microscope included in the charged particle beam device of FIG. 1.

[FIG. 3] FIG. 3 is a flowchart showing an example of asbestos detection processing performed by the charged particle beam device of FIG. 1.

[FIG. 4] FIG. 4 is an explanatory diagram showing an example of an input screen of condition data displayed on an input and output display unit included in the charged particle beam device of FIG. 1.

[FIG. 5] FIG. 5 is an explanatory diagram showing an example of a microscope image in a TEM mode in a filter acquired by the charged particle beam device of FIG. 1.

[FIG. 6] FIG. 6 is an explanatory diagram showing an example of a microscope image when a determination unit included in the charged particle beam device of FIG. 1 connects observation visual field display regions.

Description of Embodiments

In all the drawings for illustrating the embodiment, the same members are denoted by the same reference numerals in principle, and the repetitive description thereof will be omitted. Hereinafter, an embodiment will be described in detail.

<Configuration Example of Charged Particle Beam Device>

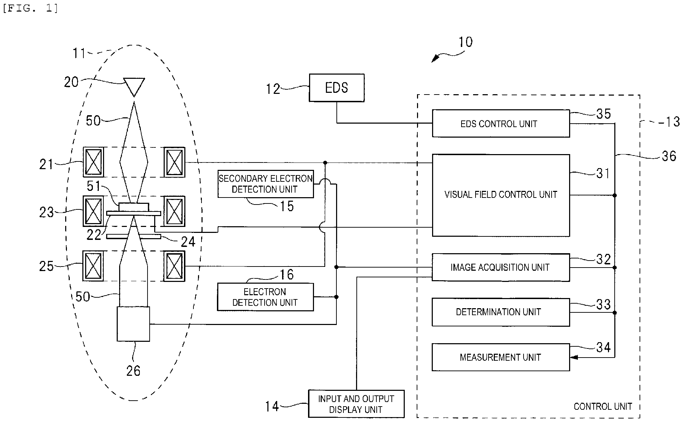

FIG. 1 is an explanatory diagram showing an example of a configuration of a charged particle beam device 10 according to an embodiment.

The charged particle beam device 10 recognizes a particle as a detection target using an electron microscope 11. The particle as a dection targe is, for example, asbestos contained in air or a material collected from a building site, a dismantling site, or the like. Then, a type of the asbestos and a content of the asbestos are calculated.

As shown in FIG. 1, the charged particle beam device 10 includes the electron microscope 11, an energy dispersive X-ray spectrometer (EDS) 12, a control unit 13, an input and output display unit 14, a secondary electron detection unit 15, and an electron detection unit 16.

The electron microscope 11 is provided with, from above to below, an electron gun 20, an irradiation lens 21, a sample stage 22, an objective lens 23, a selected-area aperture 24, an imaging lens 25, and a camera 26.

The control unit 13 includes a visual field control unit 31, an image acquisition unit 32, a determination unit 33, a measurement unit 34, and an EDS control unit 35. The visual field control unit 31, the image acquisition unit 32, the determination unit 33, the measurement unit 34, and the EDS control unit 35 are connected to each other via a bus 36 or the like. The visual field control unit 31 controls the electron gun 20, the irradiation lens 21, the sample stage 22, the objective lens 23, and the like.

The secondary electron detection unit 15 detects secondary electrons emitted from a sample 51 placed on the sample stage 22 by irradiation of an electron beam 50 in the electron gun 20. The electron detection unit 16 detects the electron beam 50 that has passed through the sample 51.

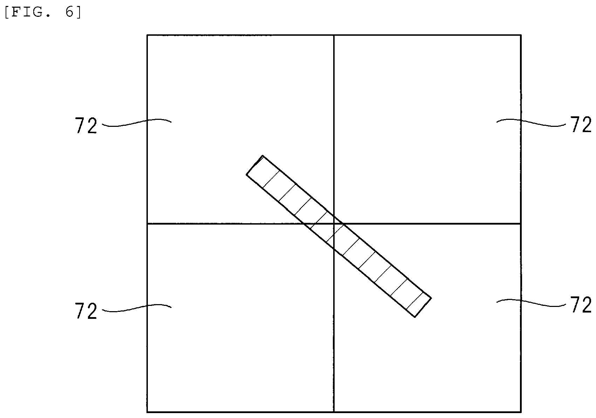

The image acquisition unit 32 acquires electrons detected by the secondary electron detection unit 15 or the electron detection unit 16, and generates an image of the sample 51 for a region irradiated with the electron beam 50. The region serves as an observation visual field display region 72 in FIG. 6.

The electron gun 20 emits the electron beam 50. The irradiation lens 21 narrows down the electron beam 50 to irradiate the sample 51. The sample stage 22 has a structure that is movable in a plane direction of the sample stage, and places the sample 51 thereon. The movement of the sample stage 22 is controlled by the visual field control unit 31.

The objective lens 23 and the imaging lens 25 transmit the sample 51 and enlarge the scattered electron beam 50. The camera 26 captures an microscopic image enlarged by the objective lens 23 and the imaging lens 25. The image acquisition unit 32 acquires the image captured by the camera 26. The selected-area aperture 24 limits a visual field of the microscope image.

The EDS 12 is provided in the vicinity of the sample stage 22. The EDS 12 detects a characteristic X-ray generated from the sample 51 by the electron beam 50 emitted from the electron gun 2. The EDS 12 is controlled by the EDS control unit 35.

The determination unit 33 determines whether the asbestos is included in the image of the camera 26 acquired by the image acquisition unit 32. When the determination unit 33 determines that the asbestos is included, the measurement unit 34 measures a length, a width, and the like of the asbestos .

When the electron microscope 11 functions as a TEM, the sample 51 held on the sample stage 22 is irradiated with, via the irradiation lens 21, the electron beam 50 emitted from the electron gun 20. The electron beam 50 that has passed through the sample 51 is enlarged by the objective lens 23 and the imaging lens 25, and is acquired into the camera 26. The camera 26 captures the acquired microscope image. The microscope image captured by the camera 26 is acquired by the image acquisition unit 32 and displayed on the input and output display unit 14. The image acquired by the image acquisition unit 32 or the generated image is displayed on the input and output display unit 14.

The input and output display unit 14 includes, for example, a display unit such as a monitor and an input unit for inputting information and the like. The input unit is, for example, a keyboard, a mouse, or a touch panel.

The electron microscope 11 includes three types of, for example, a transmission electron microscope, a scanning electron microscope, and a scanning transmission electron microscope.

A functional mode of the transmission electron microscope is a transmission electron microscopy (TEM) mode, and a functional mode of the scanning transmission electron microscope is a scanning transmission electron microscope (STEM) mode. A functional mode of the scanning electron microscope is a scanning electron microscopy (SEM) mode. In addition, the electron microscope 11 has an electron beam diffraction image mode and an EDS mode.

In the TEM mode, the electron beam 50 that has passed through the sample 51 is captured by the camera 26. In the SEM mode, an image is obtained by scanning a surface of the sample 51 with the finely narrowed electron beam 50 and detecting secondary electrons and reflected electrons by the secondary electron detection unit 15.

In the STEM mode, the finely narrowed electron beam 50 is used for scanning in the same manner as in the SEM mode for imaging. A difference from the SEM mode is that in the SEM mode, the secondary electron beam from an upper portion of the sample 51 is detected by the secondary electron detection unit 15, whereas in the STEM mode, the electron beam that has passed through the sample 51 is detected by the electron detection unit 16. The EDS mode is a mode of detecting the characteristic X-ray generated from the sample 51 by the EDS 12 described above.

<Electron Beam Diffraction Image Mode>

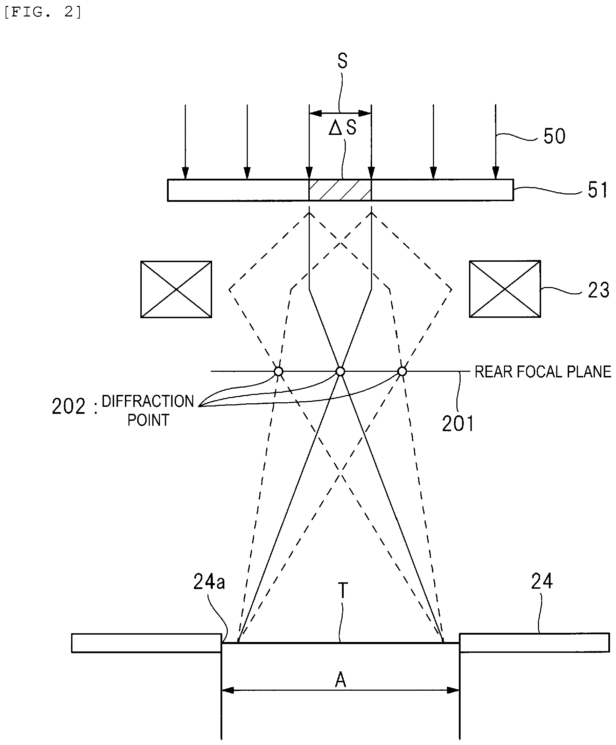

Here, the electron beam diffraction image mode will be described with reference to FIG. 2.

FIG. 2 is an explanatory diagram showing an example of the electron beam diffraction image mode of the electron microscope 11 included in the charged particle beam device 10 of FIG. 1.

FIG. 2 focuses on the sample 51, the objective lens 23, and the selected-area aperture 24 in the electron microscope 11 of FIG. 1. The electron beam 50 that has passed through the sample 51 generates a transmitted wave and a diffracted wave. The transmitted wave represents a spot at the center of a diffraction image, and the diffracted wave represents a spot outside the center of the diffraction image. The diffracted wave forms a diffraction point 202 on a rear focal plane 201 of the objective lens 23. The selected-area aperture 24 is arranged on an image plane of the diffraction point 202.

In FIG. 2, solid lines and broken lines indicate diffracted waves that pass through a hole 24a provided in the selected-area aperture 24 among the diffracted waves generated by the sample 51.

As shown in FIG. 2, it is assumed that, among the electron beams emitted to the sample 51, diffracted waves of the electron beam emitted to a region $\Delta S$ generate a diffraction image T at the hole 24a of the selected-area aperture 24.

The diffraction image T passing through the hole 24a of the selected-area aperture 24 is enlarged by the imaging lens 25 in FIG. 1, and is captured by the camera 26. As described above, the image captured by the camera 26 is acquired by the image acquisition unit 32 in FIG. 1 and displayed on the input and output display unit 14.

The spot at the center of the electron beam diffraction image is an image of the transmitted wave, and the spot outside the center is an image of the diffracted wave. The diffracted wave is caused by a periodic structure of the sample 51. In this way, when the spot at the center and the surrounding spot thereof are displayed, it is understood that an observation region of the sample 51 has a periodic structure such as a crystal.

<EDS Mode>

When an image is observed in the SEM mode, the sample is irradiated with the electron beam 50 to generate a fluorescent X-ray. Among the fluorescent X-ray, a characteristic X-ray having element specific information is included, and the characteristic X-ray is detected by the EDS 12. Then, the element constituting the substance is qualitatively analyzed by measuring energy and intensity of the detected characteristic X-ray.

<Example of Asbestos Detection Processing>

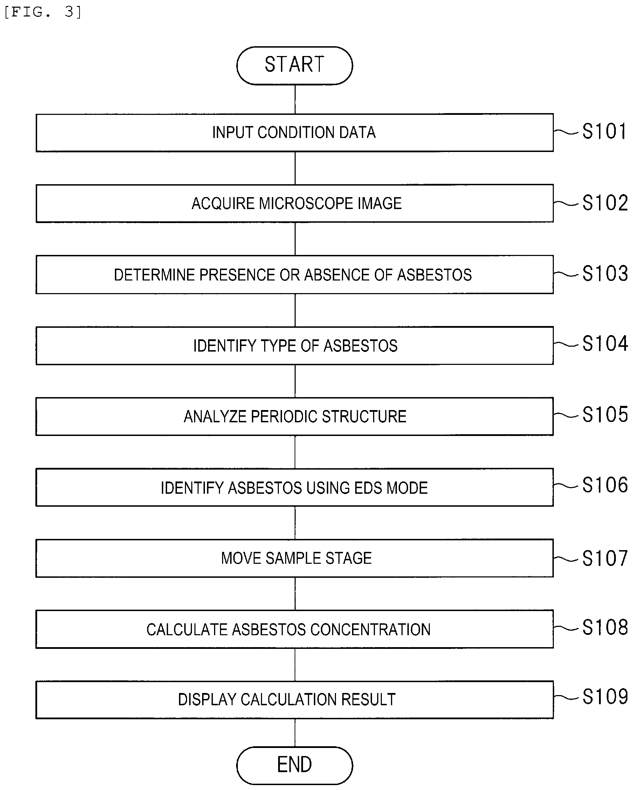

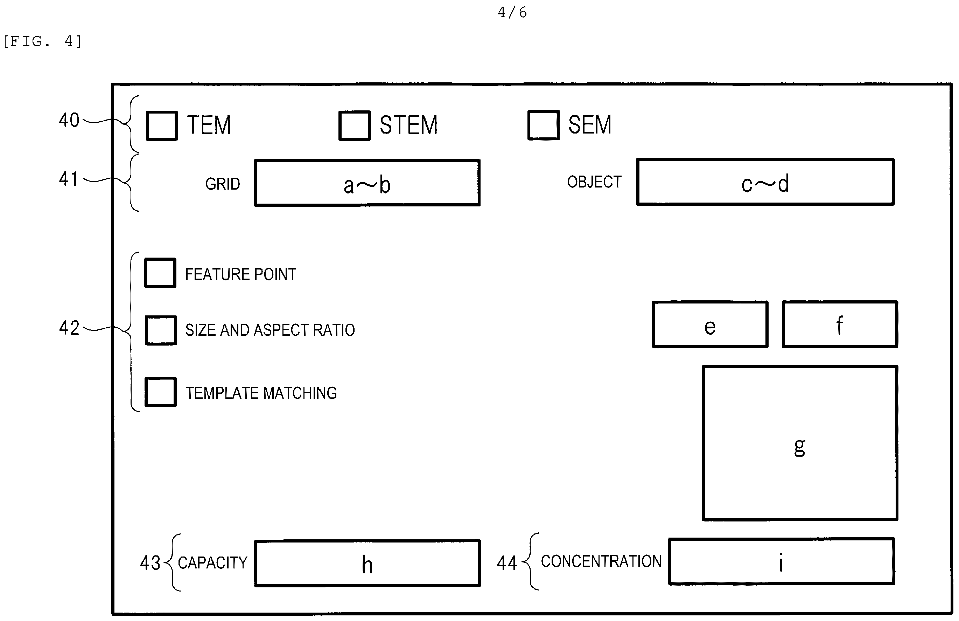

Next, asbestos detection processing performed by the charged particle beam device 10 will be described with reference to FIGS. 3 and 4.

FIG. 3 is a flowchart showing an example of the asbestos detection processing performed by the charged particle beam device 10 of FIG. 1.

First, condition data used to detect the asbestos is input (step S101). The condition data is input by, for example, an operator using the input and output display unit 14.

FIG. 4 is an explanatory diagram showing an example of an input screen of the condition data displayed on the input and output display unit 14 included in the charged particle beam device 10 of FIG. 1.

As shown in FIG. 4, items of the condition data includes, from above to below, a mode input item 40, a luminance input item 41, a recognition condition item 42, and a sample capacity item 43. The mode input item 40 is an item for selecting one of the TEM mode, the STEM mode, and the SEM mode.

Check boxes are displayed on the left sides of the "TEM", the "STEM", and the "SEM", respectively. For example, when the TEM mode is selected, a check box displayed on the left side of the "TEM" is clicked by a mouse or the like. Accordingly, the TEM mode is selected.

The luminance input item 41 includes items of a "grid" and an "object". On the right side of the "grid" and the right side of the "object", input boxes are displayed. In the input box displayed on the right side of the "grid", a grid luminance threshold value as a second determination threshold value is input.

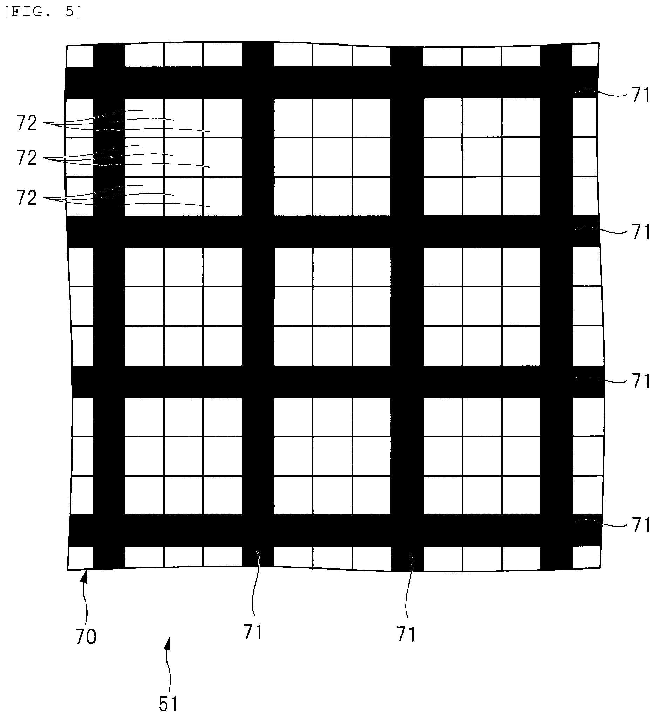

In an image acquired in the TEM mode or the STEM mode, the grid luminance threshold value is a luminance range for identifying a grid 71 provided in a filter 70 of FIG. 5 to be described below. Therefore, if the luminance is within the range of the grid luminance threshold value, it is recognized as a grid.

In the input box displayed on the right side of the "object", an asbestos luminance threshold value, which is a first determination threshold value, is input. The asbestos luminance threshold value is a luminance range for recognizing the asbestos as a detection target in an image acquired in the SEM mode, the TEM mode, or the STEM mode. If the luminance is within the range of the asbestos luminance threshold value, it is recognized as the asbestos as a detection target.

The recognition condition item 42 is an item for selecting a method of recognizing the asbestos, and includes items of "feature point", "size and aspect ratio", and "template matching". Check boxes are displayed on the left side of the "feature point", the "size and aspect ratio", and the "template matching", respectively. Input boxes are displayed on the right side of the "size and aspect ratio" and the "template matching", respectively.

The "feature point" recognizes the asbestos as a detection target based on a feature point, and identifies a type of the asbestos by detecting a similar location between different images based on feature amounts extracted from different images.

The "size and aspect ratio" identifies the type of the asbestos based on a size and an aspect ratio. The "template matching" compares a template image set in advance with the acquired image, and identifies the type of the asbestos. The size and the aspect ratio of each type of asbestos and the template image may be input from the input and output display unit 14.

Data of the size, the aspect ratio and the type of the asbestos, the template image, and the like used for identifying the asbestos based on the "size and aspect ratio" and the "template matching" are stored in, for example, a memory (not shown) of the control unit 13.

The memory is, for example, a flash ROM, a hard disk drive. The memory may be included in the image acquisition unit 32.

For example, when selecting the feature point, the check box displayed on the left side of the "feature point" is clicked by a mouse or the like. Accordingly, the recognition based on the feature point is performed. Further, when the check box displayed on the left side of the "size and aspect ratio" is clicked by a mouse or the like, it is possible to input the input box displayed on the right side of the "size and aspect ratio", and a user inputs the size and the aspect ratio using a mouse, a keyboard, or the like.

When the check box displayed on the left side of the "template matching" is clicked by a mouse or the like, it is possible to input the input box displayed on the right side of the "template matching", and the user inputs a template image or a name and an address of the template image using a mouse, a keyboard, or the like.

The recognition condition item 42 selects any one of the "feature point", the "size and aspect ratio", and the "template matching". Alternatively, two items or all of the items may be selected.

The sample capacity item 43 is a capacity of the sample used in creating the sample 51. For example, in the case of a dismantling site, the asbestos is collected by sucking air in the dismantling site by a suction pump or the like in a state where the filter 70 is mounted. In this case, the "capacity" is the capacity of the air sucked when the asbestos is collected.

Subsequently, in FIG. 3, a microscope image is acquired (step S102). In the acquisition of the microscope image, a microscope image of the observation visual field display region 72 is acquired in the mode set by the mode input item of the processing in step S101, that is, any one of the SEM mode, the STEM mode, and the TEM mode.

For example, in the processing of step S101, when the "TEM" is selected, the visual field control unit 31 of FIG. 1 controls the electron gun 20, the irradiation lens 21, the sample stage 22, and the objective lens 23 of the electron microscope 11 so as to acquire the microscope image in the TEM mode, and captures an image of one observation visual field display region 72 of the filter 70 shown in FIG. 6.

The captured image of the observation visual field display region 72 is acquired by the image acquisition unit 32. The acquired image is stored in, for example, the memory (not shown) of the control unit 13.

Subsequently, presence or absence of a particle as a detection target, that is, asbestos, is determined (step S103). In the processing of step S103, the determination unit 33 reads the image stored in the memory described above, and determines whether there is asbestos as a detection target using the asbestos luminance threshold value input to the input box of the "object" in FIG. 4. In this case, the determination unit 33 determines an object within a range of the asbestos luminance threshold value as the asbestos, and determines that an object having other luminance is not the asbestos. Accordingly, the presence or absence of the asbestos can be determined in a short time.

In the processing of step S103, when the TEM mode or the STEM mode is selected in the processing of step S101, the determination unit 33 also determines the grid 71 provided in the filter 70 using the grid luminance threshold value. The grid luminance threshold value is a luminance range input to the input box displayed on the right side of the "grid" in FIG. 4 described above.

For example, in the case of a microscope image in a TEM mode, the luminance of the asbestos is lower than other regions . The luminance of the grid 71 is lower than the luminance of the asbestos. Therefore, an object within the range of the asbestos luminance threshold value can be determined as the asbestos. Similarly, an object within the range of the grid luminance threshold value can be determined as the grid 71.

The determination unit 33 identifies an object within the range of the grid luminance threshold value in the image acquired in the TEM mode or the STEM mode as the grid 71 provided in the filter 70. Then, when it is determined that the object is the grid, the processing moves to step S107, and the visual field control unit 31 moves the sample stage 22 to avoid the grid 71.

FIG. 5 is an explanatory diagram showing an example of a microscope image of the sample 51 in the TEM mode acquired by the charged particle beam device 10 of FIG. 1.

The sample 51 is constituted by the filter 70 and the grid 71 for collecting the asbestos. The filter 70 has a circular shape as described above. Carbon is vapor-deposited on a collection dust surface of the filter 70 by a carbon vapor deposition device or the like. The grids 71 that support the filter 70 are formed on the vapor-deposited carbon. The grid 71 is formed of, for example, nickel.

In the case of the microscope image in the TEM mode, the luminance of the asbestos is lower than other regions in which no asbestos exists. Further, since the electron beam does not pass through a part of the grids 71 of the filter 70, the grids 71 become shadows and become a black image as shown in FIG. 5. Therefore, the luminance is further lower than that of the asbestos. This also applies to the STEM mode.

Therefore, by setting a luminance range of the black image portion to the grid luminance threshold value, the determination unit 33 can identify the grid 71. Similarly, since the luminance of the asbestos is higher than that of the grid 71 and lower than that of a region in which no asbestos exists, it is possible to determine the asbestos by setting an object in the range having the asbestos luminance threshold value.

In the processing of step S103, when the determination unit 33 determines that the object is the grid 71, the visual field control unit 31 moves the sample stage 22 to avoid the grid 71. In the case of the TEM mode, the visual field control unit 31 avoids the grid 71 by calculating a movement amount based on a calibration value per pixel of the camera 26 and a magnification and by moving the sample stage 22.

For example, when an imaging element size of the camera 26 is 2048 pixels × 2048 pixels, the calibration value per pixel is 10 μm and the magnification is 10, 000 times, a visual field movement amount, that is, a movement amount of the sample stage 22 is as follows.

$$\text{Movement amount} = 2048 \text{ pixels} \times 10 \text{ μm/pixel}/10000$$

$$= 2.048 \text{ μm}$$

Subsequently, in FIG. 3, when it is determined in step S103 that the asbestos exists, the type of the asbestos and the like are identified based on the conditions set in the recognition condition item 42 in the processing of step S101 (step S104).

At this time, when the "size and aspect ratio" is selected as the recognition condition item 42, the measurement unit 34 measures the size and the aspect ratio of the asbestos. The determination unit 33 compares the size and the aspect ratio of the asbestos measured by the measurement unit 34 with data indicating a relationship between a size and an aspect ratio stored in the memory (not shown) of the control unit 13 and the type of the asbestos, and identifies the type of the asbestos and the like.

The determination unit 33 stores the electron microscope image acquired in the processing of step S102, a stage coordinate of the sample stage 22, the size and aspect ratio of the asbestos measured by the measurement unit 34, the type of the asbestos identified, and the like into the memory (not shown) of the control unit 13 described above in association with each other.

When the "template matching" is selected as the recognition condition item 42, the determination unit 33 compares the template image stored in the memory (not shown) of the control unit 13 with the asbestos existing in the acquired image to identify the type of the asbestos.

Then, the determination unit 33 stores the electron microscope image acquired in the processing of step S102, the stage coordinate of the sample stage 22, the type of the asbestos identified, and the like into the memory (not shown) of the control unit 13 in association with each other.

Similarly, when the "feature point" is selected, the determination unit 33 stores the type of the asbestos identified based on the feature point, the electron microscope image acquired in the processing of step S102, and the stage coordinate of the sample stage 22 into the memory (not shown) of the control unit 13 in association with each other.

Subsequently, the periodic structure of the asbestos is analyzed using an electron beam diffraction mode described in FIG. 2 (step S105) . The processing in step S105 is processing executed only in the TEM mode or the STEM mode.

The determination unit 33 identifies the type of the asbestos and the like based on the periodic structure of the asbestos analyzed using the electron beam diffraction mode. The image acquisition unit 32 acquires an electron beam diffraction image captured by the camera 26 using the electron beam diffraction mode. The determination unit 33 stores the electron beam diffraction image acquired by the image acquisition unit 32 and the type of the asbestos identified into the memory (not shown) of the control unit 13 in association with each other.

Even if the type of the asbestos cannot be identified by the processing of step S104, the type of the asbestos can be identified well by performing the analysis using the electron beam diffraction mode in step S105. Thus, the identification of the type of the asbestos can be performed with high accuracy.

The type of the asbestos using the EDS mode is identified (step S106) . In the EDS mode, as described above, the characteristic X-ray generated from the sample 51 by the electron beam emitted from the electron gun 20 is detected by the EDS 12.

The determination unit 33 acquires a specific X-ray detected by the EDS 12, and identifies the type of the asbestos based on the specific X-ray. In addition, the determination unit 33 stores the acquired specific X-ray and the type of the asbestos identified into the memory (not shown) of the control unit 13 in association with each other.

The processing of step S106 may be performed only in the case of the SEM mode in which the processing of step S105 is not performed, or may be performed in the case of the TEM mode and the STEM mode in which the processing of step S105 is performed.

In the case of the TEM mode and the STEM mode, in addition to the identification of the type of the asbestos using the electron beam diffraction mode in step S105, the identification of the type of the asbestos can be performed with higher accuracy by performing the processing of step S106.

There are six types of asbestos, for example, chrysotile, amosite, and crocidolite, and the level of carcinogenicity differs depending on the type. Therefore, it is important to identify not only the number of the asbestos, but also the type of the asbestos.

After the processing of step S106 or when the grid is determined in the grid identification processing of step S103, the visual field control unit 31 moves the visual field to the next observation visual field display region 72, where the microscope image is to be acquired, by moving the sample stage 22 (step S107) . The processings of steps S102 to S107 described above are repeatedly executed for all the observation visual field display regions 72 of the filter 70.

When the identification of the asbestos is completed for all the observation visual field display regions 72 of the filter 70 by the above processings, the determination unit 33 calculates a particle concentration, that is, an asbestos concentration, based on the measured number of the asbestos and the value input to the sample capacity item 43 in FIG. 4 (step S108).

In the processing of step S108, the microscope images of all the observation visual field display regions 72 are connected, and the number of the asbestos identified in the processing of step S106 is counted for each type. Alternatively, the number of the asbestos identified by the processing of step S104 may be counted for each type.

At this time, in order to avoid repeatedly counting the asbestos, the determination unit 33 determines whether the asbestos is connected based on a positional relationship of the asbestos in the connected microscope image, and performs the counting.

In this case, the determination unit 33 recognizes the asbestos by, for example, image recognition processing or the like, and determines whether the asbestos extends over two or more observation visual field display regions 72. Then, when one asbestos extends over two or more observation visual field display regions 72, the determination unit 33 counts as one asbestos.

<Example of Counting Asbestos>

FIG. 6 is an explanatory diagram showing an example of a microscope image when the determination unit 33 included in the charged particle beam device 10 of FIG. 1 connects the observation visual field display regions 72.

In FIG. 6, a state where one asbestos exists in four observation visual field display regions 72 is shown. In FIG. 6, the asbestos is indicated by hatching.

The determination unit 33 performs image recognition processing of the asbestos when the observation field display regions 72 are connected, and determines whether one asbestos extends over two or more observation visual field display regions 72.

In the case of FIG. 6, since the determination unit 33 determines that one asbestos extends over the four observation visual field display regions 72 by the image recognition processing, the determination unit 33 counts the asbestos extending over the four observation visual field display regions 72 as one.

By the image recognition processing, for example, when the asbestos of each of the four observation visual field display regions 72 is interrupted, the determination unit 33 determines that the asbestos in the four observation visual field display regions 72 are different asbestos, and counts the asbestos as four asbestos. Further, the concentration may be calculated for each type of asbestos, or the asbestos concentration may be calculated simply based on the total number of the asbestos instead of the type of the asbestos.

When the asbestos concentration is calculated, the determination unit 33 outputs a calculation result to the image acquisition unit 32. The image acquisition unit 32 displays the calculation result on the input and output display unit 14 (step S109). In this case, the asbestos concentration for each type is displayed, and when all the asbestos concentrations are calculated, the concentrations may also be displayed.

By the above, the concentration calculation processing of the asbestos is completed.

In this way, since the charged particle beam device 10 identifies the type of the asbestos and automatically calculates the number of the asbestos, calculation of the asbestos concentration for each type of asbestos can be performed with high accuracy in a short time. Further, since the asbestos concentration can be calculated for each type of asbestos, it is possible to perform a countermeasure according to a situation of a site such as a construction site.

In the above-described embodiment, the electron microscope 11 included in the charged particle beam device 10 functions as the SEM, the TEM, and the STEM, but the electron microscope 11 may be configured to function as at least one of the SEM, the TEM, and the TEM.

For example, when the electron microscope 11 has the function of the SEM mode, the processing of step S105 in FIG. 3 is not performed, and the processing moves from step S104 to step S106.

Reference Sign List

| | |
|---|---|
| 10 | charged particle beam device |
| 11 | electron microscope |
| 12 | EDS |
| 13 | control unit |
| 14 | input and output display unit |
| 15 | secondary electron detection unit |
| 16 | electron detection unit |
| 20 | electron gun |
| 21 | irradiation lens |
| 22 | sample stage |
| 23 | objective lens |
| 25 | imaging lens |
| 26 | camera |
| 31 | visual field control unit |
| 32 | image acquisition unit |
| 33 | determination unit |
| 34 | measurement unit |
| 35 | EDS control unit |
| 36 | bus |
| 51 | sample |
| 70 | filter |
| 71 | grid |

72 observation visual field display region

**Claims**

1. A charged particle beam device (10) comprising:

   an electron microscope (11) that irradiates a sample (51) with an electron beam to capture a microscope image; and

   a control unit (13) that determines a particle detected from the microscope image captured by the electron microscope (11), and calculates a particle concentration of the determined particle, wherein the control unit (13) includes

   an image acquisition unit (32) that acquires the microscope image captured by the electron microscope (11), and

   a determination unit (33) that determines whether the particle as a detection target exists in the microscope image acquired by the image acquisition unit, counts a number of the particle as a detection target when it is determined that the particle as a detection target exists,, and calculates a particle concentration based on the number of the counted particle, wherein

   the particle detected by the control unit is asbestos, **characterized in that**
   the charged particle beam device further comprises:

   a visual field control unit (31) that moves a sample stage (22) on which the sample is placed, the sample stage being provided in the electron microscope,

   wherein the determination unit (33) compares luminance of the acquired microscope image with a determination threshold value indicating a luminance range input from outside, and determines an object within a range of the determination threshold value as a grid (71) included in the sample, and the visual field control unit (31) moves the sample stage (22) to an observation visual field display region (72) which is a region where a microscope image is captured next while avoiding a grid (71) when it is determined that there is the grid (71) in the microscope image acquired by the determination unit,

   wherein the determination unit (33) connects observation visual field display regions (72), determines whether the recognized particle extends over two or more observation visual field display regions (72), and, when one particle extends over two or more observation visual field regions, counts it as one particle.

2. The charged particle beam device (10) according to claim 1, wherein
   the electron microscope (11) has at least one function of a scanning electron microscope, a transmission electron microscope, and a scanning transmission electron microscope.

3. The charged particle beam device (10) according to claim 2, wherein
   the determination unit (33) analyzes a periodic structure of the asbestos in an image acquired in a BBM TEM mode, or a STEM mode.

4. The charged particle beam device (10) according to claim 2 or 3, wherein

   the determination unit (33) identifies a type of the asbestos using an EDS mode in an image acquired in a SEM mode when the periodic structure of the asbestos in an image acquired according to claim 3 is not performed, and in

   a TEM mode, or a STEM mode when the periodic structure of the asbestos in an image acquired according to claim 3 is performed.

**Patentansprüche**

1. Ladungsteilchenstrahlvorrichtung (10), umfassend:

   ein Elektronenmikroskop (11), das eine Probe (51) mit einem Elektronenstrahl bestrahlt, um ein Mikroskopbild aufzunehmen; und

eine Steuereinheit (13), die ein aus dem durch das Elektronenmikroskop (11) aufgenommenen Mikroskopbild detektiertes Teilchen bestimmt und eine Teilchenkonzentration des bestimmten Teilchens berechnet, wobei die Steuereinheit (13) enthält

eine Bilderfassungseinheit (32), die das durch das Elektronenmikroskop (11) aufgenommene Mikroskopbild erfasst, und

eine Bestimmungseinheit (33), die bestimmt, ob das Teilchen als ein Detektionsziel in dem durch die Bilderfassungseinheit erfassten Mikroskopbild vorhanden ist,

eine Anzahl des Teilchens als ein Detektionsziel zählt, wenn bestimmt wird, dass das Teilchen als ein Detektionsziel vorhanden ist, und eine Teilchenkonzentration basierend auf der Anzahl des gezählten Teilchens berechnet, wobei

das durch die Steuereinheit detektierte Teilchen Asbest ist, **dadurch gekennzeichnet, dass** die Ladungsteilchenstrahlvorrichtung ferner umfasst:

eine Sichtfeldsteuereinheit (31), die einen Probentisch (22) bewegt, auf dem die Probe platziert ist, wobei der Probentisch in dem Elektronenmikroskop vorgesehen ist,

wobei die Bestimmungseinheit (33) die Luminanz des erfassten Mikroskopbilds mit einem Bestimmungsschwellenwert vergleicht, der einen von außen eingegebenen Luminanzbereich angibt, und ein Objekt innerhalb eines Bereichs des Bestimmungsschwellenwerts als ein in der Probe enthaltenes Gitter (71) bestimmt, und

die Sichtfeldsteuereinheit (31) den Probentisch (22) zu einem Beobachtungssichtfeldanzeigebereich (72) bewegt, der ein Bereich ist, in dem ein Mikroskopbild als nächstes aufgenommen wird, während ein Gitter (71) vermieden wird, wenn bestimmt wird, dass das Gitter (71) in dem durch die Bestimmungseinheit erfassten Mikroskopbild vorhanden ist,

wobei die Bestimmungseinheit (33) Beobachtungssichtfeldanzeigebereiche (72) verbindet, bestimmt, ob sich das erkannte Teilchen über zwei oder mehr Beobachtungssichtfeldanzeigebereiche (72) erstreckt, und, wenn sich ein Teilchen über zwei oder mehr Beobachtungssichtfeldbereiche erstreckt, es als ein Teilchen zählt.

2. Ladungsteilchenstrahlvorrichtung (10) nach Anspruch 1, wobei das Elektronenmikroskop (11) mindestens eine Funktion eines Rasterelektronenmikroskops, eines Transmissionselektronenmikroskops und eines Rastertransmissionselektronenmikroskops aufweist.

3. Ladungsteilchenstrahlvorrichtung (10) nach Anspruch 2, wobei die Bestimmungseinheit (33) eine periodische Struktur des Asbests in einem in einem TEM-Modus oder einem STEM-Modus erfassten Bild analysiert.

4. Ladungsteilchenstrahlvorrichtung (10) nach Anspruch 2 oder 3, wobei die Bestimmungseinheit (33) einen Typ des Asbests unter Verwendung eines EDS-Modus in einem in einem SEM-Modus erfassten Bild identifiziert, wenn die periodische Struktur des Asbests in einem nach Anspruch 3 erfassten Bild nicht durchgeführt wird, und im TEM-Modus oder einem STEM-Modus, wenn die periodische Struktur des Asbests in einem nach Anspruch 3 erfassten Bild durchgeführt wird.

**Revendications**

1. Dispositif à faisceau de particules chargées (10) comprenant :

un microscope électronique (11) qui irradie un échantillon (51) avec un faisceau électronique pour capturer une image de microscope ; et

une unité de commande (13) qui détermine une particule détectée à partir de l'image de microscope capturée par le microscope électronique (11), et calcule une concentration de particule de la particule déterminée, dans lequel

l'unité de commande (13) inclut

une unité d'acquisition d'image (32) qui acquiert l'image de microscope capturée par le microscope électronique (11), et

une unité de détermination (33) qui détermine si la particule en tant que cible de détection existe dans l'image de microscope acquise par l'unité d'acquisition d'image,

compte un nombre de la particule en tant que cible de détection lorsqu'il est déterminé que la particule en tant que cible de détection existe, et calcule une concentration de particule sur la base du nombre de la particule comptée, dans lequel

la particule détectée par l'unité de commande est détectée, **caractérisé en ce que**

le dispositif à faisceau de particules chargées comprend en outre :

une unité de commande de champ visuel (31) qui déplace un étage d'échantillon (22) sur lequel l'échantillon est placé, l'étage d'échantillon étant prévu dans le microscope électronique,

dans lequel l'unité de détermination (33) compare une luminance de l'image de microscope acquise avec une valeur de seuil de détermination indiquant une plage de luminance entrée depuis l'extérieur, et détermine un objet dans une plage de la valeur de seuil de détermination en tant que grille (71) incluse dans l'échantillon, et

l'unité de commande de champ visuel (31) déplace l'étage d'échantillon (22) vers une région d'affichage de champ visuel d'observation (72) qui est une région où une image de microscope est capturée ensuite tout en évitant une grille (71) lorsqu'il est déterminé qu'elle est la grille (71) dans l'image de microscope acquise par l'unité de détermination,

dans lequel l'unité de détermination (33) connecte des régions d'affichage de champ visuel d'observation (72), détermine si la particule reconnue s'étend sur deux régions d'affichage de champ visuel d'observation ou plus (72), et, lorsqu'une particule s'étend sur deux régions d'affichage de champ visuel d'observation ou plus, la compte en tant que particule.

2. Dispositif à faisceau de particules chargées (10) selon la revendication 1, dans lequel
le microscope électronique (11) a au moins une fonction d'un microscope électronique à balayage, d'un microscope électronique à transmission, et d'un microscope électronique à transmission à balayage.

3. Dispositif à faisceau de particules chargées (10) selon la revendication 2, dans lequel
l'unité de détermination (33) analyse une structure périodique de la détection dans une image acquise dans un mode TEM, ou un mode STEM.

4. Dispositif à faisceau de particules chargées (10) selon la revendication 2 ou 3, dans lequel
l'unité de détermination (33) identifie un type de la détection en utilisant un mode EDS dans une image acquise dans un SEM
lorsque la structure périodique de la détection dans une image acquise selon la revendication 3 n'est pas effectuée, et dans un mode TEM, ou un mode STEM lorsque la structure périodique de la détection dans une image acquise selon la revendication 3 est effectuée.

[FIG. 1]

[FIG. 2]

[FIG. 3]

```
                    ┌─────────────┐
                    │    START    │
                    └──────┬──────┘
                           │
    ┌──────────────────────────────────────────────┐
    │              INPUT CONDITION DATA              │────S101
    └──────────────────────┬───────────────────────┘
                           │
    ┌──────────────────────────────────────────────┐
    │            ACQUIRE MICROSCOPE IMAGE            │────S102
    └──────────────────────┬───────────────────────┘
                           │
    ┌──────────────────────────────────────────────┐
    │      DETERMINE PRESENCE OR ABSENCE OF ASBESTOS │────S103
    └──────────────────────┬───────────────────────┘
                           │
    ┌──────────────────────────────────────────────┐
    │             IDENTIFY TYPE OF ASBESTOS          │────S104
    └──────────────────────┬───────────────────────┘
                           │
    ┌──────────────────────────────────────────────┐
    │            ANALYZE PERIODIC STRUCTURE          │────S105
    └──────────────────────┬───────────────────────┘
                           │
    ┌──────────────────────────────────────────────┐
    │          IDENTIFY ASBESTOS USING EDS MODE      │────S106
    └──────────────────────┬───────────────────────┘
                           │
    ┌──────────────────────────────────────────────┐
    │               MOVE SAMPLE STAGE                │────S107
    └──────────────────────┬───────────────────────┘
                           │
    ┌──────────────────────────────────────────────┐
    │         CALCULATE ASBESTOS CONCENTRATION       │────S108
    └──────────────────────┬───────────────────────┘
                           │
    ┌──────────────────────────────────────────────┐
    │            DISPLAY CALCULATION RESULT          │────S109
    └──────────────────────┬───────────────────────┘
                           │
                    ┌─────────────┐
                    │     END     │
                    └─────────────┘
```

[FIG. 4]

[FIG. 5]

[FIG. 6]

**REFERENCES CITED IN THE DESCRIPTION**

**Patent documents cited in the description**

- JP 2006127805 A
- KR 20100041120 A